Europäisches Patentamt

European Patent Office

Office européen des brevets

(11) Publication number: **0 364 642**
**A1**

## EUROPEAN PATENT APPLICATION

(21) Application number: 88311801.0

(22) Date of filing: 14.12.88

(51) Int. Cl.5: **G01N 21/39**

(30) Priority: 22.09.88 PCT/GB88/00776

(43) Date of publication of application:
25.04.90 Bulletin 90/17

(84) Designated Contracting States:
ES GR

(71) Applicant: THE VICTORIA UNIVERSITY OF MANCHESTER
c/o Vuman Limited Enterprise House
Manchester Science Park Lloyd Street North
Manchester M15 4EN(GB)

(72) Inventor: Mohebati, Arman c/o Vuman Limited
Enterprise House Manchester Science Park
Lloyd Street North Manchester M15 4EN(GB)
Inventor: King, Terence A. c/o Vuman Limited
Enterprise House Manchester Science Park
Lloyd Street North Manchester M15 4EN(GB)

(74) Representative: Allman, Peter John et al
MARKS & CLERK Suite 301 Sunlight House
Quay Street
Manchester M3 3JY(GB)

(54) Gas detection method and apparatus.

(57) An apparatus for detecting a predetermined gas in an absorption cell. The output of an infra-red laser source is transmitted to the absorption cell. The transmitted output is controlled to vary with time between at least two wavelengths one of which is more readily absorbed by the gas than the other. The amplitudes of the wavelengths after transmission are compared to detect the gas. The laser output may include the two frequencies and a filter may be used to alternate between them. Alternatively the laser output may be a single frequency which is scanned across a frequency at which the gas absorbs readily.

FIG.4

## GAS DETECTION METHOD AND APPARATUS

The present invention relates to a method and apparatus for detecting a gas.

The ability to monitor concentrations of explosive and toxic gases accurately and reliably is of great importance in the oil, gas, chemical, petrochemical, mining and water industries where a build up or leakage of toxic or explosive gases could severely affect the safety of industrial plant.

Gas sensors which require optical fibre connections only have been proposed and have several advantages over the conventional electrochemical, pellistor, semiconductor and flame ionization gas detectors. These advantages include chemical inertness, immunity to poisoning, freedom from electromagnetic interference, high sensitivity, stability and safe operation in explosive environments. Such sensors also have potential for use in distributed sensing systems to reduce the cost of sensors for large industrial complexes requiring monitoring at several points.

Silica optical fibres are available but such fibres limit the usable wavelength region to the near infra-red (0.8μm - 1.8μm). This is because of the relatively high losses of silica fibres in the UV, visible and mid infra-red regions of the spectrum. Many common pollutants have overtone and combination absorption bands in the near infra-red region however and it has been proposed to use these absorption bands in optical fibre gas detectors. These absorption bands are substantially weaker than the fundamental absorption bands of molecular gases occurring in the mid infra-red region however and hence long absorption paths are required to monitor concentrations of gases to ppm levels. High intensity light is required given these long absorption paths, and this presents problems in remote sensing applications. Calibration of sensor outputs also presents problems as it is vital to ensure that sensor output variations result only from changes in the concentration of the gas to be detected.

It is an object of the present invention to provide an apparatus and method for detecting gas which obviate or mitigate the above problems.

According to the present invention there is provided an apparatus for detecting a predetermined gas in an absorption cell, comprising an infra-red laser source, means for controlling the transmission via optical fibre from the laser source to a sensor incorporating the absorption cell of a laser wavelength which varies with time between at least two wavelengths one of which wavelengths is absorbed by the said gas and the other of which wavelengths is less readily absorbed by the said gas, means for detecting signals representative of the absorption of the said laser wavelengths by the said gas within the absorption cell, and means for comparing the monitored amplitudes to detect the said gas in the absorption cell.

The laser source may be a multimode laser source a first mode of which is at the said one wavelength and a second mode of which is at the said other wavelength, and wherein a tunable filter is interposed between the laser source and the absorption cell, the transmission control means being operative to tune the filter to alternately pass the first and second modes through the absorption cell. The laser source is preferably a laser diode which is temperature turned such that its strongest longitudinal mode coincides with the frequency of maximum absorption of the gas. The filter may be a Fabry-Perot filter having a free spectral range less than the free spectral range of the laser cavity.

In an alternative arrangement, the laser source is a tunable laser diode the output of which is directed through the absorption cell, and means are provided to tune the laser wavelength such that the wavelength is scanned across a frequency at which the said wavelength is readily absorbed by the said gas. The laser diode may be driven by a current on which two sinusoidal modulations are superimposed, and the detecting means may comprise a synchronous detector operating at twice the frequency of one of the sinusoidal modulations, whereby a second harmonic signal is produced which is proportional in amplitude to the concentration of the said gas. The laser diode frequency may be varied by varying the current through the diode or by varying the temperature of the diode.

Embodiments of the present invention will now be described, by way of example, with reference to the accompanying drawings, in which:

Fig. 1 illustrates absorption bands of some common pollutants in the near infra-red region of the spectrum;

Fig. 2 illustrates in the upper trace the absorption spectrum of a gas to be detected, illustrates in the middle trace the output spectrun of a commercially available laser diode, and illustrates in the lower trace transmission peaks for a Fabry-Perot filter with no control input (solid line) and with a predetermined control input (broken line) showing the position of the shifted transmission peaks resulting from the application of that control input;

Fig. 3 illustrates the absorption spectrum of the $\gamma_2 + 2\gamma_3$ combination band of methane;

Fig. 4 is a schematic diagram of a gas sensor in accordance with the present invention;

Fig. 5 illustrates a chart recorder trace of the output of the sensor of Fig. 4 when the absorption cell is alternatively evacuated and filled to different concentrations of methane;

Fig. 6 illustrates the variation of the output of the sensor of Fig. 4 with methane concentration, the broken line indicating the lower explosion limit of methane in air;

Fig. 7 illustrates the output of the sensor of Fig. 4 monitored for short and long periods with 40 torrs of methane in the absorption cell.

Fig. 8 is a schematic illustration of a gas sensor in accordance with the second embodiment of the present invention;

Fig. 9 illustrates an output obtained from the embodiment of Fig. 8;

Fig. 10 shows an alternative output obtained from the arrangement of Fig. 8 over a set temperature range; and

Fig. 11 illustrates the relationship between the sensor output in the embodiment of Fig. 8 with variations in the concentration of the gas to be detected.

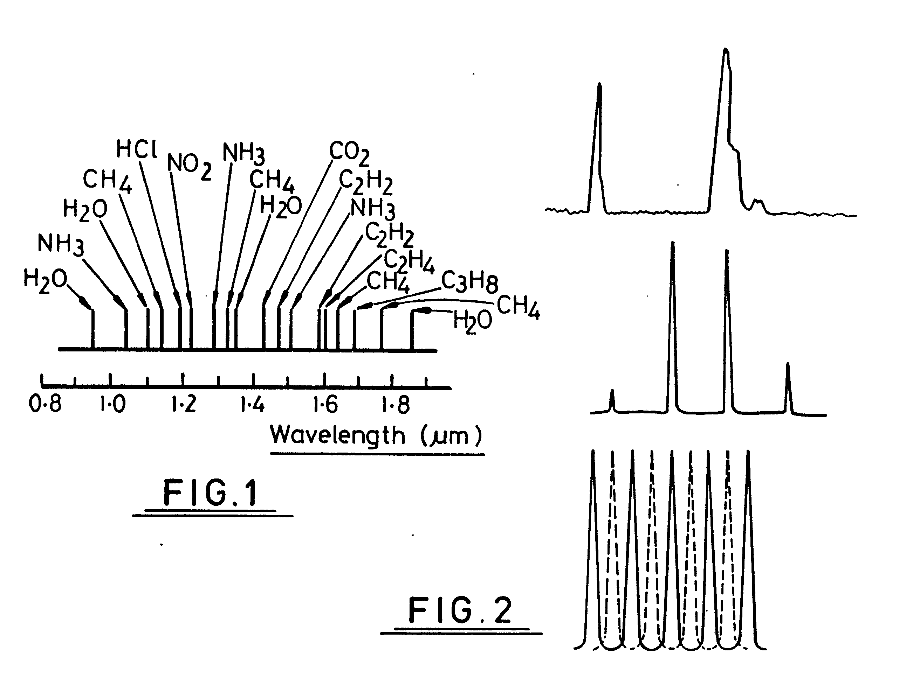

By appropriate selection and temperature tuning of commercially available laser diodes the present invention enables the monitoring of most of the species shown in Fig. 1. Furthermore, the use of a laser diode with its higher output power compared to light emitting diodes and thermal sources allow the use of long path multi-pass cells and long optical fibre links. The invention relies upon the differential absorption of radiation of different wavelengths from a laser source by a pollutant gas of interest. The laser source, radiation detector and associated electronic processing equipment may be remote from the absorption cell, the radiation being transmitted to and from the absorption cell via an optical fibre link. The optical fibre link and the remote absorption cell allow the monitoring of hostile environments, electrically noisy environments, areas where use of electrical instruments are restricted, and applications where line-of-sight measurements are not possible or convenient.

Near infra-red laser diodes generally emit radiation in several longitudinal modes separated in frequency by the free spectral range of the laser diode cavity. The middle trace of Fig. 2 shows the output spectrum of a known laser diode. The laser diode may be temperature tuned so that one of its longitudinal modes coincides with an absorption line of the gas of interest. The upper trace of Fig. 2 illustrates the absorption spectrum of a gas of interest. If the output of the laser diode is collimated and the collimated beam enters a scanning etalon (Fabry-Perot filter) with a free spectral range less than the free spectral range of the laser diode cavity, the etalon can be tuned such that it is in resonance for the laser mode coinciding with the gas absorption. If a squarewave voltage is then applied to the control elements such as piezoelectric elements of the scanning etalon, and the amplitude of this voltage is adjusted such that it brings an adjacent mode of the laser diode into resonance with the etalon, (note lower trace in Fig. 2) then the etalon alternately switches between the two modes of the laser. As only one of these two modes is absorbed by the gas of interest, the presence and concentration of the gas can be detected.

Very high selectivity can be obtained by tuning the laser diode to the appropriate wavelength, and the differential absorption technique and the use of a single photodiode for detecting the two wavelengths eliminates the problems associated with matching the responses of detectors.

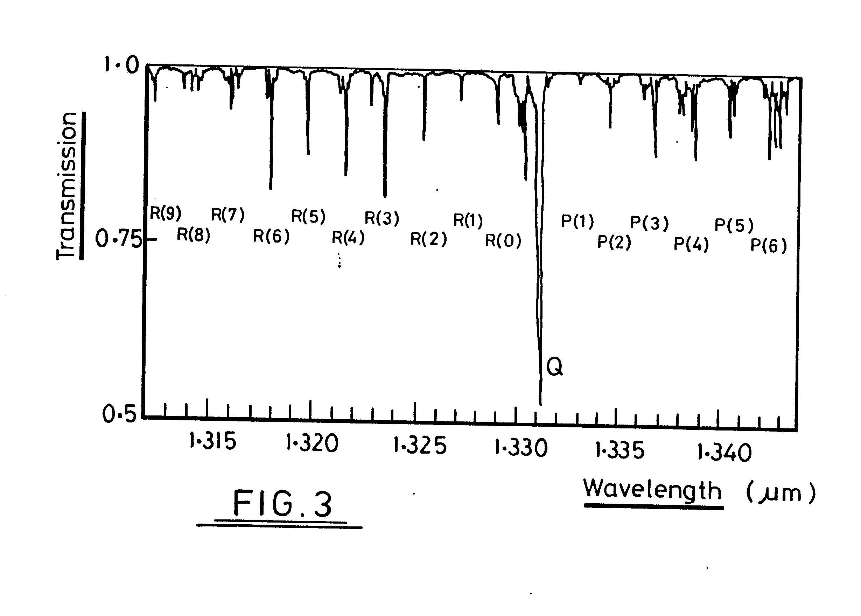

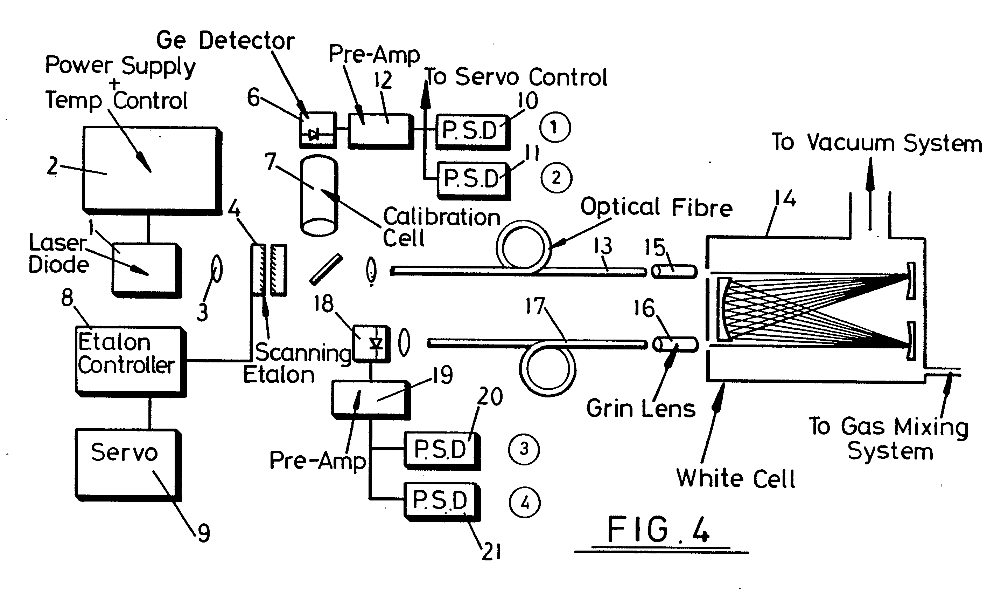

Figs. 3 to 7 illustrate aspects of an embodiment of the invention intended to detect methane gas in one atmosphere of nitrogen. The $\gamma_2 + 2\gamma_3$ combination band of methane is shown in Fig. 3. The highest absorption occurs at 1.331um in the Q-branch of the $\gamma_2 + 2\gamma_3$ combination band. Referring to Fig. 4, a GaInAsP laser diode 1 (Lasertron, QLM 1300 SM) emitting at 1.33um was selected and temperature tuned using a power supply and temperature control circuit 2 such that the strongest longitudinal mode of the laser coincides with the maximum absorption in the Q-branch of the $\gamma_2 + 2\gamma_3$ band of methane. The output of the laser diode was collimated using a microscope objective 3 and the collimated beam was passed through a scanning etalon 4.

The output of the etalon is sampled by a beamsplitter 5 and detected using a Ge photodiode 6. removable reference gas cell 7 positioned before the monitor photodiode simplifies the tuning of the diode wavelength to peak absorption. The fine adjustment of the etalon 4 is achieved by a controller 8 receiving an input from a servo 9 which in turn receives a feedback input from phase sensitive detectors 10 and 11 connected by a pre-amp 12 to the detector 6. The output of the monitor detector 6 is synchronously detected by the phase sensitive detectors 10 and 11 at the etalon scanning frequency and also at a higher frequency at which the laser diode current is modulated.

The main beam passed by the etalon 4 is launched into a length 13 of 50/125μm multimode fibre which transmits the beam to a remotely located absorption cell 14 via graded index lens 15. The output of the cell is launched via lens 16 into another length 17 of 50/125um fibre which carries the signal back to a second Ge detector photodiode 18. The output of this photodiode is amplified by pre-amp 19 and synchronously detected using phase sensitive detectors 20 and 21 at the same two frequencies as the output of the monitor photodiode 6. The ratio of the output at the two frequencies is proportional to the absorption by the gas and hence proportional to the gas concentration. The output of the monitor photodiode 6 can be used for the calibration of the system by filling the reference gas cell with a known concentration of gas.

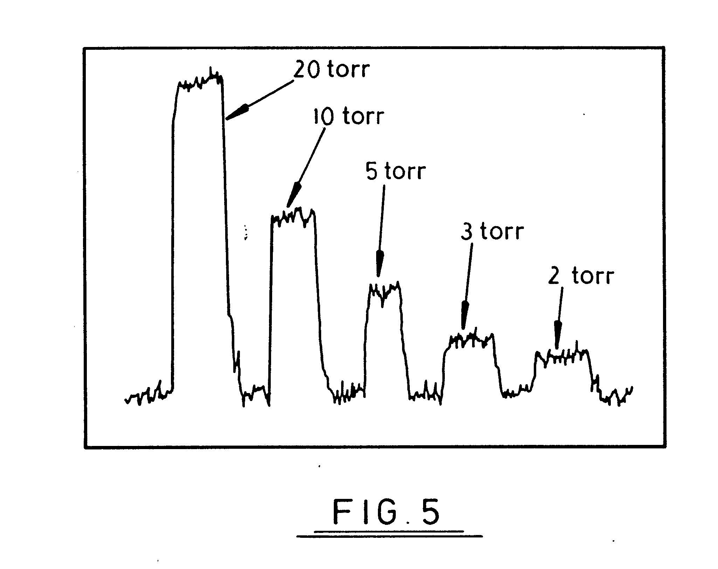

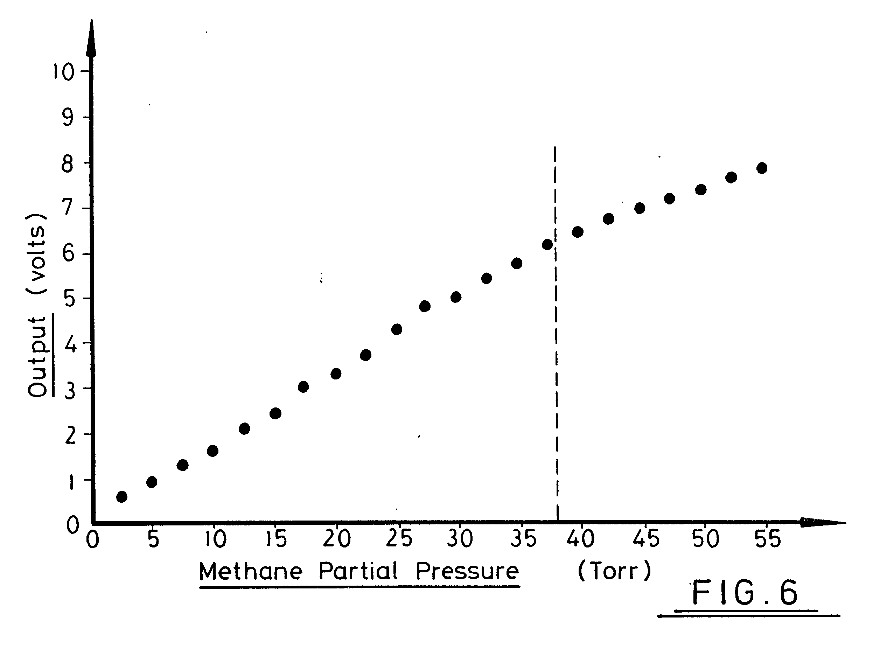

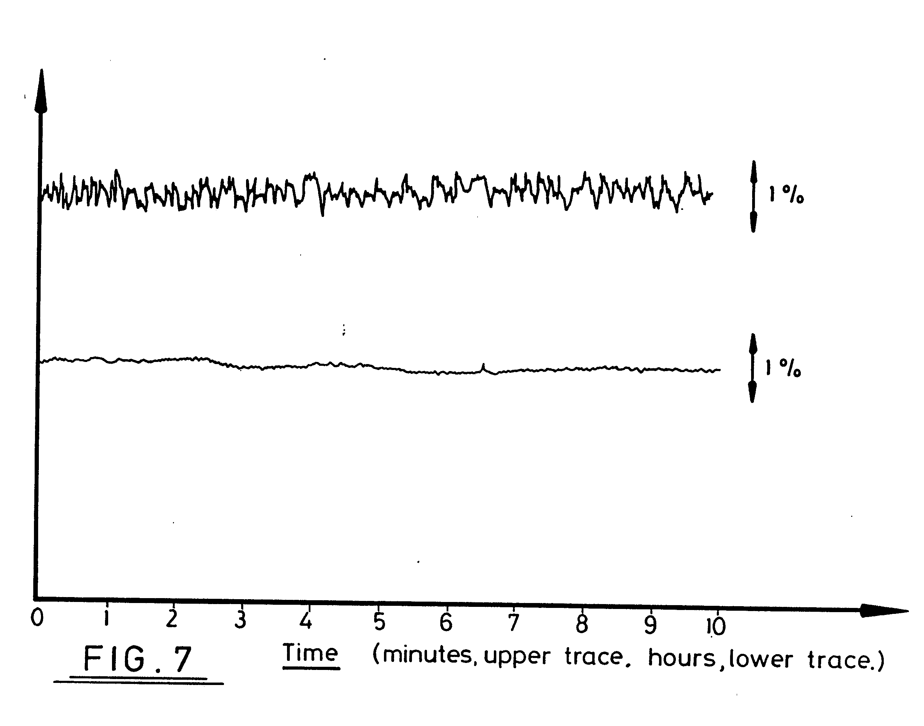

The above described system has been tested for methane using a 1 metre single pass cell. Fig. 5 shows the response of the system when the absorption cell is alternately evacuated and filled to different concentrations of methane. A calibration curve is obtained by plotting the output against the concentration of gas in the absorption cell. It can be seen from Fig. 6 that the output shows good linearity for lower concentrations up to approximately 40 torr of methane. The stability of the system has been determined by filling the absorption cell with 40 torr of methane and monitoring the output for a period of ten hours. The fluctuations and the drift in the output signal is less than 1% in this period as shown in Fig. 7.

The above described system has shown good stability and can be made stable over very long periods by continuously calibrating the system using the output of the monitor photodiode 6. The power available from the laser diode allows the use of a long path multi-pass cell such as a White cell to increase the path length, and hence the sensitivity, without requiring the use of cooled detectors. Using a multi-pass cell allows the detector to achieve sensitivities of the order of 10ppm making the sensor suitable for a wide range of applications.

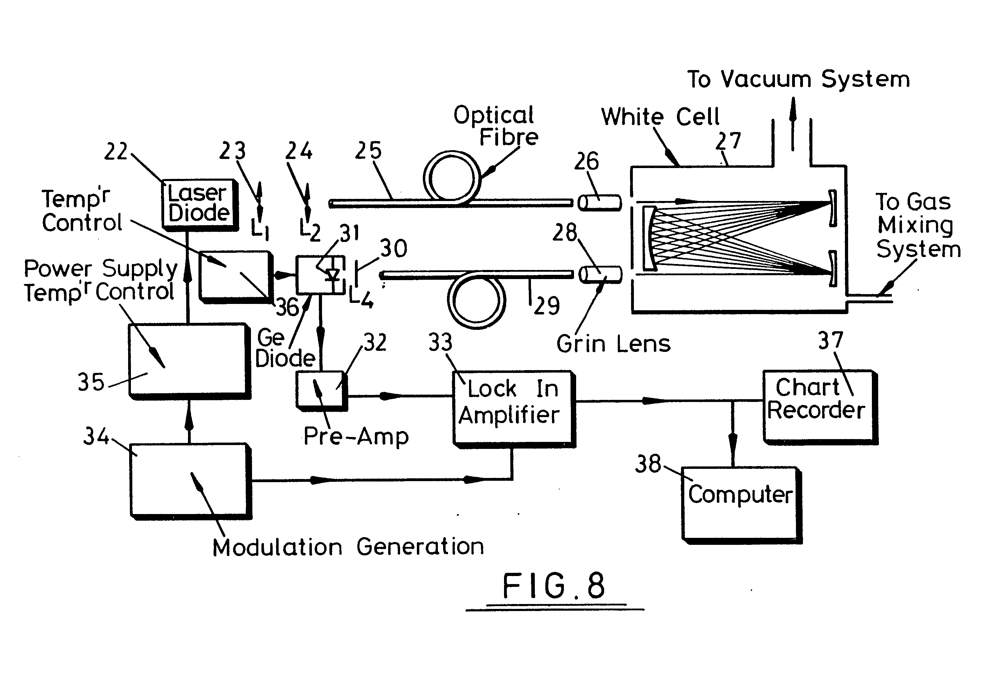

Fig. 8 shows a schematic diagram of a sensor suitable for second harmonic detection. A laser diode 22 is focussed by lenses 23 and 24 into an optical fibre 25 and coupled by a graded index lens 26 into White cell 27. The cell 27 contains the sample of gas to be monitored. Light entering the White cell is reflected in multiple passes to a graded index lens 28 which couples the light into an optical fibre 29. Light transmitted through the fibre 29 is focussed by a lens 30 on a germanium diode 31 the output of which is fed via pre-amplifier 32 to a lock-in amplifier 33.

The lock-in amplifier 33 receives a synchronisation input from a modulation generator 34 which also controls a power supply and temperature controller 35 that controls the operation of the laser diode 22. A further temperature controller 36 maintains the stability of the detector 31.

The power supply and temperature controller 35 controls the laser diode 22 such that its output wavelength is linearly scanned. This may be achieved by varying either the drive current through the laser diode 22 or its temperature. The modulation generator 34 causes two sinusoidal modulations W1 and W2 to be superimposed on the diode laser drive current. The sensor output is then synchronously detected at twice the frequency W1.

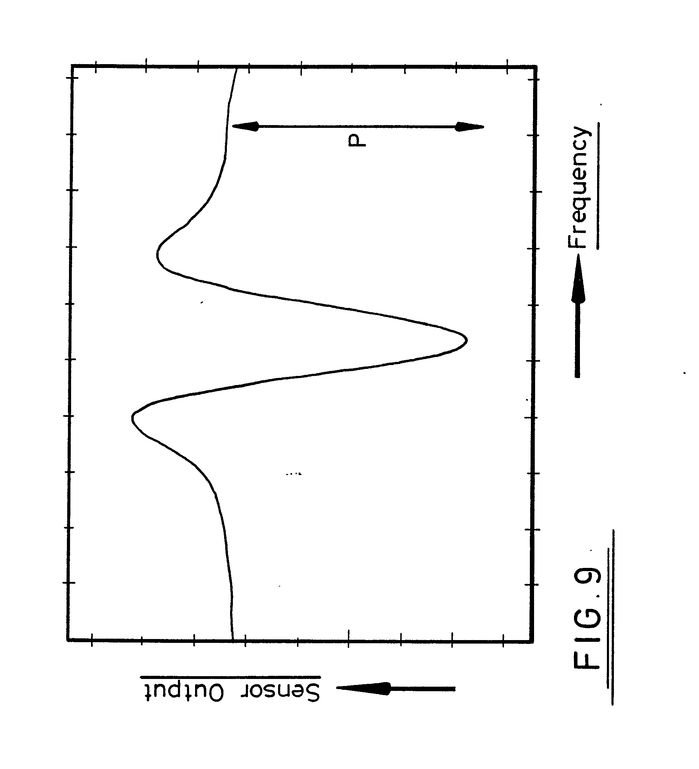

As the wavelength of the diode laser is scanned slowly through the absorption line, a second harmonic signal is observed. This effectively selectively smooths out the output to take out details other than those resulting from the scanning of the laser wavelength across an absorption line. The result is an output illustrated in Fig. 9, the signal amplitude illustrated by the arrow P being proportional to the concentration of the gas having an absorption line at the frequency corresponding to the sharp change in amplitude.

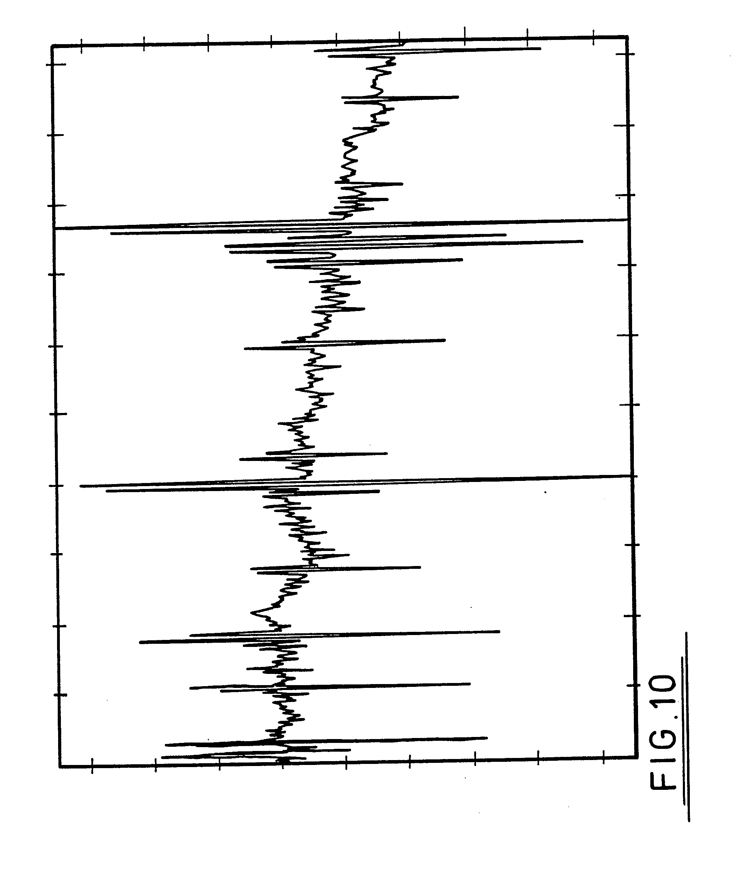

The laser frequency may be controlled by adjusting its temperature or its current, but it is possible to cover a much larger wavelength range by relying upon temperature changes rather than current changes. Thus by varying the temperature it is possible to observe absorption signals from several gases in a single scan. Fig. 10 illustrates the output of the lock-in amplifier 33 of Fig. 8 as plotted by a chart recorder 37 and recorded by a computer 38. Fig. 7 shows the lock-in amplifier output for a 30°C temperature scan. As can be seen many lines appear in the spectrum, that is in the illustrated example the lines due to $CH_4$, $H_2O$, HF, NH3, HBr and $CO_2$. The spectrum can then be processed using the computer 38 to give the concentration of the individual species. The second modulation W2 hs the purpose of eliminating possible optical fringes produced by the absorption cell.

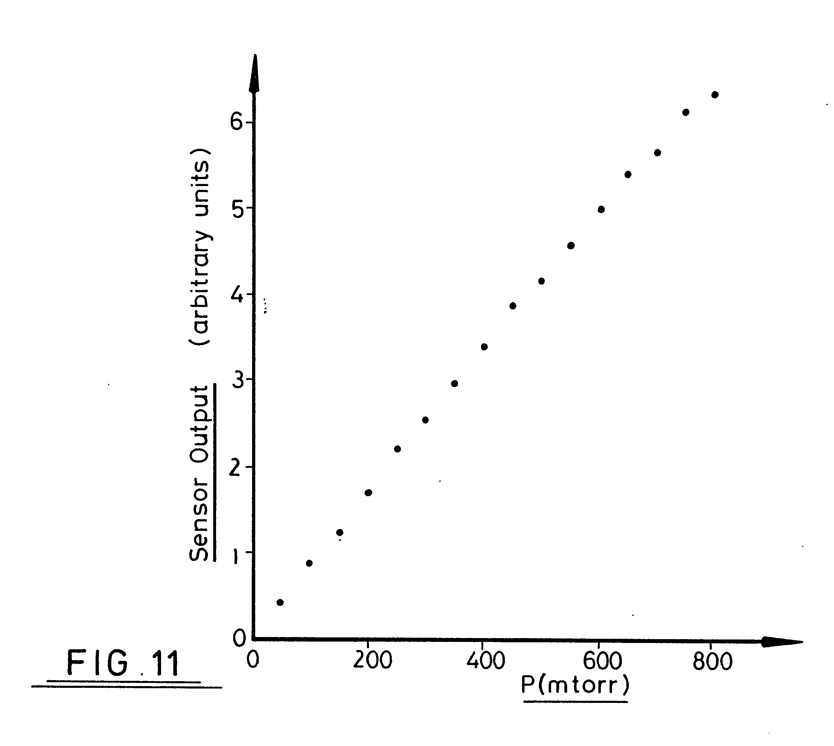

Tests which have been conducted indicated that the minimum detectable concentrations for $CH_4$, HF and $H_2O$ are respectively 50ppm m, l00ppb m, and 50ppm m. Fig. 11 shows the output of the sensor plotted against concentration for methane. It can be seen from the experimental data that the output is linear over several decades. Due to the nature of the measurements the drifts in the sensor output are negligible and the sensor accuracy is noise limited rather than drift limited.

The fibre links used in the experiments referred to above with respect to Figs. 8 to 11 were 2.5km of single mode fibre and 2.5km of 50/125 um fibre. Due to the larger power levels available the system can tolerate power losses of the order of 10dB, which might occur as a result of the contamination of the optics in the absorption cell. It is also possible to divert the radiation to several absorption cells in different locations via optical fibre switches, thus forming a network of sensors over a wide area to enable the utilisation of the same source and detection system for a large number of sensors.

**Claims**

1. An apparatus for detecting a predetermined gas in an absorption cell, comprising an infra-red laser source, means for controlling the transmission via optical fibre from the laser source to a sensor incorporating the absorption cell of a laser wavelength which varies with time between at least. two wavelengths one of which wavelengths is absorbed by the said gas and the other of which wavelengths is less readily absorbed by the said ·gas, means for detecting signals representative of the absorption of the said laser wavelengths by the said gas within the absorption cell, and means for comparing the monitored amplitudes to detect the said gas in the absorption cell.

2. An apparatus according to claim 1, wherein the laser source is a multimode laser source a first mode of which is at the said one wavelength and a second mode of which is at the said other wavelength, and wherein a tunable filter is interposed between the laser source and the absorption cell, the transmission control means being operative to tune the filter to alternately pass the first and second modes through the absorption cell.

3. An apparatus according to claim 1 or 2, wherein the laser source is a laser diode which is temperature tuned such that its strongest longitudinal mode coincides with the frequency of maximum absorption of the said gas.

4. An apparatus according to claim 1, 2 or 3, wherein the filter is a Fabry-Perot filter having a free spectral range less than the free spectral range of the laser cavity.

5. An apparatus according to claim 1, wherein the laser source is a tunable laser diode, the output of which is directed through the absorption cell, and means are provided to tune the laser wavelength such that the wavelength is scanned across a frequency at which the said wavelength is readily absorbed by the said gas.

6. An apparatus according to claim 5, wherein the laser diode is driven by a current on which two sinusoidal modulations are superimposed, and the detecting means comprises a synchronous detector operating at twice a frequency of one of the sinusoidal modulations, whereby a second harmonic signal is produced which is proportional in amplitude to the concentration of the said gas.

7. An apparatus according to claim 5 or 6, comprising means for varying current through the diode to vary the laser diode frequency.

8. An apparatus according to claim 5 or 6, comprising means for varying the temperature of the diode to vary the laser diode frequency.

EP 0 364 642 A1

**FIG.1**

**FIG.2**

FIG.3

EP 0 364 642 A1

FIG. 4

Power Supply + Temp Control — 2
Laser Diode — 1
3
Etalon Controller — 8
Servo — 9
4 — Scanning Etalon
Ge Detector — 6
Pre-Amp — 12
To Servo Control
P.S.D — 10 (1)
P.S.D — 11 (2)
Calibration Cell — 7
Optical Fibre
13
15
14
To Vacuum System
Grin Lens — 16
White Cell
To Gas Mixing System
18
Pre-Amp — 19
P.S.D — 20 (3)
P.S.D — (4) 21
17
EP 0 364 642 A1

20 torr

10 torr

5 torr

3 torr

2 torr

FIG. 5

EP 0 364 642 A1

FIG.6

FIG. 7    Time    (minutes, upper trace. hours, lower trace.)

To Vacuum System

Optical Fibre

White Cell

27

Laser Diode 22

23

24

25

Temp'r Control

L₁ L₂

26

To Gas Mixing System

Power Supply Temp'r Control

31

30

28

36

L₄

29

35

Ge Diode

Grin Lens

37

32

33

Chart Recorder

34

Pre-Amp

Lock In Amplifier

38

Computer

Modulation Generation

FIG.8

EP 0 364 642 A1

FIG.9

Frequency

Sensor Output

P

EP 0 364 642 A1

FIG.10

EP 0 364 642 A1

FIG.11

EP 0 364 642 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A-2 165 640 (STC)<br>* Pages 1-2 *<br>--- | 1,3,5,7 | G 01 N 21/39 |
| X | US-A-4 489 239 (W. GRANT et al.)<br>* Columns 2,9-10; figures 1-4 *<br>--- | 1,2,4 | |
| X | PROCEEDINGS OF THE SPIE, vol. 286, 1981, pages 33-36; P. POKROWSKY et al.: "Sensitive detection of hydrogen chloride by derivative spectroscopy with a diode laser"<br>* pages 33-36 *<br>----- | 1,3,5,6 | |
| | | | TECHNICAL FIELDS SEARCHED (Int. Cl.4)<br><br>G 01 N 21/39<br>G 01 J 3/427<br>G 01 J 3/433 |

The present search report has been drawn up for all claims

| Place of search | Date of completion of the search | Examiner |
|---|---|---|
| THE HAGUE | 28-12-1989 | BOEHM CH.E.D. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
........................................................................
& : member of the same patent family, corresponding
  document

EPO FORM 1503 03.82 (P0401)